# EUROPÄISCHE PATENTSCHRIFT

(11) **EP 2 773 927 B1**
(45) Veröffentlichungstag und Bekanntmachung des Hinweises auf die Patenterteilung: **10.03.2021**
(21) Anmeldenummer: 12783850.6
(22) Anmeldetag: 02.11.2012
(51) Int. Cl.: G01G 19/02

(54) **VERFAHREN ZUM WIEGEN EINES FAHRZEUGES, SOWIE MESSSYSTEM UND MESSANORDNUNG HIERFÜR**
METHOD FOR WEIGHING A VEHICLE, AND MEASURING SYSTEM AND MEASURING ARRANGEMENT THEREFOR
PROCÉDÉ DE PESAGE D'UN VÉHICULE, AINSI QUE SYSTÈME ET AGENCEMENT DE MESURE CORRESPONDANTS

(30) Priorität: 04.11.2011 CH 17802011
(43) Veröffentlichungstag der Anmeldung: 10.09.2014
(73) Patentinhaber: Kistler Holding AG, 8408 Winterthur (CH)
(72) Erfinder: CORNU, David, CH-6500 Bellinzona (CH); HOFMANN, Adrian, CH-8464 Ellikon am Rhein (CH)
(86) Internationale Anmeldenummer: PCT/CH2012/000247
(87) Internationale Veröffentlichungsnummer: WO 2013/063710

(56) Entgegenhaltungen:
- WO-A1-01/22044
- US-A- 5 717 390

## Beschreibung

### Technisches Gebiet

Die Erfindung betrifft ein Verfahren zur Bestimmung des Gewichts G eines Fahrzeuges während der Fahrt auf einem Strassenabschnitt einer Strasse.

### Stand der Technik

Im Rahmen von Applikationen im Bereich Mauterhebung von Lastwagen sowie Check-In Systemen bei Verladestationen (Toll Plaza), werden sehr genaue und effiziente Wiegesysteme von Lastwagen gebraucht, um gewichtsabhängige Kosten stellen zu können. Es ist dabei wünschenswert, dass die Messung im fliessendem Verkehr, ohne den Verkehr zu stoppen, stattfinden kann. Die Gewichtsmessung wird dann zur Berechnung der Gebühr (Mautgebühr) eingesetzt.

Heutzutage sind 3 technische Lösungen zur Gewichtserfassung bekannt, nämlich statische Wiegebrücken, Low-Speed Achslastwaagen und die High-Speed WIM (Weigh-in-Motion) Systeme.

Die Wiegebrücken sind statische Messsysteme. Um ein LWK zu wiegen, muss er auf die Waage fahren, dort stoppen und warten, bis die Anzeige stabilisiert. Der Vorgang ist zwar sehr genau aber leider auch sehr zeitintensiv und nicht geeignet für Messungen im fliessenden Verkehr.

Die Low-Speed Achslastwaagen sind kurze Wiegebrücken, etwa einen Meter lang, die eine Achslast bei gleichmässiger, langsamer Überfahrt effizient und genau messen können. Ihre Nachteile sind einerseits die kostspielige Installation, weil eine grosse Grube ausgehoben und abgesichert werden muss, was eine Spur-Sperrung von mehreren Tagen mit sich zieht, und andererseits die hohen Kosten für die intensive Wartung. Ausserdem ist der Geschwindigkeitsbereich des Lastwagens bei der Überfahrt auf etwa 10 bis maximal 30 km/h limitiert.

Die High-Speed WIM (Weigh in Motion) Systeme bestehen aus kleinen Schienenförmigen Sensoren wie aus der EP 0654654 bekannt, welche schnell und einfach in die Fahrbahn installiert werden. Die WIM-Sensoren werden in eine kleine Nut mit maximalen Abmessungen 60x70 mm verlegt und in der Strasse vergossen. Die Spur-Sperrung dauert weniger als 8 Stunden. Diese Systeme sind auch wartungsfrei und werden erfolgreich im Bereich High-Speed WIM eingesetzt, wo üblicherweise mit Autobahngeschwindigkeit gefahren wird. Bei Überfahrten mit kleinen Geschwindigkeiten, insbesondere bei unregelmässigen Geschwindigkeiten, beim Beschleunigen, Bremsen während der Überfahrt und beim Stop&Go Verkehr wird die Genauigkeit der Gewichtsmessung nicht mehr eingehalten, es kommt zu grossen Messfehlern. In diesem Bereich können somit solche Systeme nicht erfolgreich eingesetzt werden.

In der WO01/22044 wird ein Verfahren vorgeschlagen, um Messungen zu verbessern, die mit einem statischen Wiegesystem durchgeführt wurden, wobei die Fahrzeuge während der Fahrt mit einer Geschwindigkeit von etwa 16 km/h gewogen werden sollen. Ein grosses Problem stellt dabei die Geschwindigkeit der Fahrzeuge bei der Überfahrt dar, da die Fahrzeuge bei grossen Geschwindigkeiten nur kurze Zeit auf der Waage verweilen und herkömmliche Wiegesysteme nur etwa 60cm breit sind. Schwingungen der Fahrzeuge bei der Überfahrt führen zu grossen Ungenauigkeiten, da die Fahrzeuge nur wenige Millisekunden auf dem Wiegesystem bleiben. Zudem ist die Empfindlichkeit des Wiegesystems nicht konstant über die gesamte Überfahrlänge, was die Messgenauigkeit erneut verringert. Während bei sehr kurzen Wiegesystemen von einer konstanten Geschwindigkeit ausgegangen werden kann, wird in der genannten Schrift aus diesen Gründen vorgeschlagen, die gemessenen Gewichte mit den aktuell gemessenen Geschwindigkeiten zu multiplizieren und das Produkt über die Zeit zu integrieren. Auf diese Weise werden die Fehler auskorrigiert. Bei diesen Systemen ist aber darauf zu achten, dass die Länge des Wiegesystems stets lang genug ist. An Stelle der bekannten Wiegesysteme von 60cm Überfahrlänge wird vorgeschlagen, die Länge so lange auszugestalten, dass jeweils mindestens zwei Achsen eines Fahrzeuges gleichzeitig auf dem Wiegesystem stehen können. Solche Systeme sind sehr aufwändig einzubauen und teuer.

### Darstellung der Erfindung

Aufgabe der vorliegenden Erfindung ist es, ein Verfahren zur Bestimmung des Gewichts G eines Fahrzeuges während der Fahrt auf einem Strassenabschnitt einer Strasse anzugeben, das unabhängig von der Überfahrgeschwindigkeit genaue Angaben liefert. Insbesondere soll das Fahrzeug auch auf der Messstrecke stehen bleiben können oder mit Autobahngeschwindigkeit die Messstrecke passieren, ohne dass Genauigkeitseinbussen hingenommen werden müssen. Die Messanordnung zum Verfahren soll zudem kostengünstig sein. Weitere Aufgaben bestehen in den Angaben einer Messeinrichtung sowie einer Messkette hierfür.

Die Aufgabe wird gelöst durch die Merkmale der unabhängigen Patentansprüche.

Die der Erfindung zugrunde liegende Idee besteht darin, dass bei einer Überfahrt eines Fahrzeuges in einem Strassenabschnitt sowohl die Radlasten Fᵢ(t) aller Räder i mittels WIM-Sensoren als auch die Geschwindigkeit v(t) des Fahrzeuges bei der gesamten Überfahrt als Zeitfunktionen erfasst werden und bei der "Auswertung der Daten zur Bestimmung des Gewichts G die Geschwindigkeiten und deren zeitliche Änderungen als Gewichtung der zeitgleich ermittelten Radlasten verwendet werden. Erfindungsgemäss wird dabei ein WIM Sensor verwendet, der in Fahrtrichtung schmäler ist als die Länge der Aufstandsfläche eines Rades.

Das erfindungsgemässe Messsystem zur Bestimmung des Gewichts G eines Fahrzeuges während der Fahrt auf einem Strassenabschnitt unter Berücksichtigung der Geschwindigkeit des Fahrzeuges und deren zeitliche Änderungen während der Gewichtsermittlung umfasst mindestens einen WIM-Sensor zum Einbauen in einen Strassenabschnitt einer Fahrbahn, der Überfahr- Radlasten zeitabhängig erfassen kann. Zudem umfasst es eine Vorrichtung zum Bestimmen der Geschwindigkeit eines Fahrzeuges als Zeitfunktion während einer Fahrt in einen Strassenabschnitt, sowie eine Auswerteeinheit zum Auswerten der ermittelten Daten. Erfindungsgemäss wird dabei ein WIM Sensor verwendet, der in Fahrtrichtung schmäler ist als die Länge der Aufstandsfläche eines Rades.

Die erfindungsgemässe Messanordnung zur Bestimmung des Gewichts G eines Fahrzeuges während der Fahrt auf einem Strassenabschnitt einer Strasse umfasst ein erfindungsgemässes Messsystem, wobei der WIM-Sensor in einer Strasse quer zur Fahrtrichtung plan mit seiner Oberfläche zur Strassenoberfläche eingebaut ist. Erfindungsgemäss wird dabei ein WIM Sensor verwendet, der in Fahrtrichtung schmäler ist als die Länge der Aufstandsfläche eines Rades.

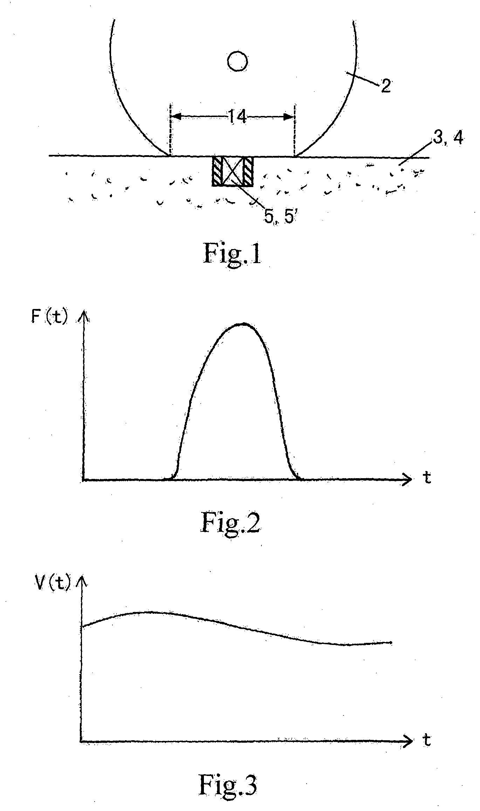

In der Folge wird unter dem Begriff "WIM Sensor" stets ein Sensor verstanden, der schmäler ist als eine typische Länge der Aufstandsfläche eines Rades, wie in Fig. 1 dargestellt. Typische Werte sind etwa 5-7 cm Breite, resp. Überfahrlänge.

Im Unterschied zu dem im Stand der Technik genannten Verfahren wird in der vorliegenden Erfindung kein breites Wiegesystem sondern ein schmaler Weigh-in-Motion (WIM) Sensor verwendet. Dies führt zu dem Unterschied, dass beim vorliegenden erfindungsgemässen Verfahren nicht das Gewicht des Fahrzeuges oder eines Fahrzeugrades als Ganzes gemessen werden kann, weil kein statisches Wiegesystem mit der entsprechenden Länge von mehr als einer Länge der Aufstandsfläche eines Rades verwendet wird. Im Stand der Technik wird jeweils ein Wiegesystem von mindestens 60 cm Überfahrlänge verwendet, also deutlich länger als die Länge der Aufstandsfläche eines Rades. Da bei der vorliegenden Erfindung jeweils nur ein Teil des Rades auf der dem WIM Sensor aufliegt, werden die Radlasten gemessen, demnach jeweils Teillasten, die niemals das gesamte Gewicht des Rades oder Doppelrades umfassen können.

Durch das angegebene Verfahren ist es zudem, im Gegensatz zum Verfahren nach dem Stand der Technik, möglich, die Gewichte der Fahrzeuge bei Überfahrgeschwindigkeiten bis Autobahngeschwindigkeit zu bestimmen, wobei insbesondere auch negative Geschwindigkeiten zugelassen sind. Somit ist auch ein leichtes Rückwärtsrollen zulässig, wie dies nach einem Stillstand durchaus vorkommen kann.

Der Vorteil dieser Erfindung liegt insbesondere daran, dass das Verfahren universell anwendbar ist und für alle Fahrzeuge verlässliche Werte liefert. Dies ist eine notwendige Voraussetzung für eine automatische Erhebung einer Gebühr für die Überfahrt.

### Kurze Beschreibung der Zeichnungen

Im Folgenden wird die Erfindung unter Beizug der Zeichnungen näher erklärt. Es zeigen
- Fig. 1: eine schematische Darstellung im Schnitt eines Strassenabschnitts mit einem eingebauten WIM-Sensor und einem Rad eines Fahrzeuges während der Überfahrung des Sensors;
- Fig. 2: ein aufgenommenes zeitabhängiges Signal einer Radlast F(t);
- Fig. 3: eine aufgenommene zeitabhängige Geschwindigkeit v(t) des Fahrzeuges während der Überfahrt über den WIM-Sensor;
- Fig. 4: Eine erfindungsgemässe Messanordnung mit Fahrzeugen, welche den Streckenabschnitt überfahren;
- Fig. 5: Ein Beispiel eines Zeitsignals F(t) eines WIM-Sensors beim Überfahren einer Fahrzeugkomposition mit synchronisierten zeitabhängigen Geschwindigkeitswerten v(t);
- Fig. 6: Gewichtung der Radlasten F(t) mit den synchronisierten Geschwindigkeiten v(t);
- Fig. 7: Strassenabschnitt mit zwei WIM-Sensoren und einem Array con Strahlen zum Erfassen der Geschwindigkeit.

### Wege zur Ausführung der Erfindung

Die Fig. 1 zeigt einen WIM-Sensor 5 eingebaut in einem Strassenabschnitt 3 und ein Rad 2 eines Fahrzeuges 1 während der Überfahrung des WIM-Sensors 5. Die Darstellung zeigt übertrieben, dass das Rad 2 durch die Last des Lastwagens 1 keine Punktauflage auf der Strasse 4 hat sondern etwas flachgedrückt ist. Der WIM-Sensor 5 hat in der Regel eine Breite von 50-70 mm, die typische Auflagefläche eines Lastwagenrades weist je nach Durchmesser und Luftdruck des Rades eine Länge 14 von etwa 100-200mm auf. Fig. 2 zeigt die vom WIM-Sensor 5 erfasste, zeitabhängige Radlast Fᵢ(t) des Rades 2 i. Dabei kann das Rad i wahlweise ein Rad oder ein Doppelrad sein, wobei beide Räder 2 eines Doppelrades, die auf derselben Seite einer Achse an einem Fahrzeug 1 montiert sind, gemeinsam über den WIM-Sensor 5 fahren. Ein Doppelrad 2 wird mit einem Rad 2 gleichbehandelt und nicht unterschieden. In der Folge ist daher nur von Rädern 2 die Rede, wobei Doppelräder 2 dabei auch gemeint sind.

Fig. 3 zeigt die zeitgleich zur Radlastmessung F(t) gemessene, zeitabhängige Geschwindigkeitsmessung des Fahrzeuges 2 v(t). Die gemessenen Datensätze F(t) und v(t) müssen dazu zeitlich exakt synchronisiert werden, die Zeiten t müssen daher in beiden Datensätzen F(t) und v(t) zu jeder Zeit identisch sein.

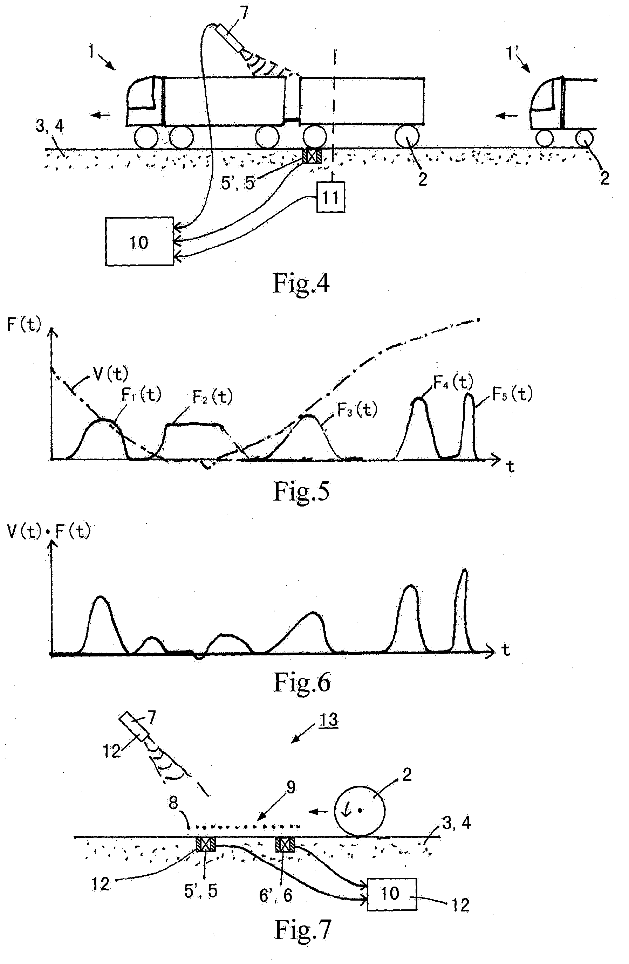

Fig. 4 zeigt einen Strassenabschnitt 3 und ein erfindungsgemässes Messsystem 12 zur Ermittlung des Fahrzeuggewichts G einer Fahrzeugkomposition 1, welche den Strassenabschnitt 2 überfahren. Das Messsystem 12 umfasst einen WIM-Sensor 5 zur Ermittlung der Radlasten F(t), eine Vorrichtung 7 zur Bestimmung der Geschwindigkeit v(t) sowie eine Auswerteeinheit 10 zum Auswerten der ermittelten Daten und zur Bestimmung des Gewichts G der Fahrzeugkomposition 1. In dieser Fig. 4 ist insbesondere das erfindungsgemässe Messsystem 12 installiert dargestellt, wodurch sich die erfindungsgemässe Messanordnung 13 ergibt. Der WIM-Sensor 5 ist in der Strasse 4 quer zur Fahrtrichtung plan mit seiner Oberfläche zur Strassenoberfläche eingebaut. Dabei reicht ein WIM-Sensor 5 in der Regel nur bis zur Strassenmitte zur Erfassung einer Seite der Radachsen, während ein anschliessender WIM-Sensor 5' von der Strassenmitte bis zum anderen Strasserand reicht, zur Erfassung der Radlasten der Räder 2 auf der anderen Seite der Achse. Diese WIM-Sensor 5, 5' werden gemeinsam als WIM-Sensor bezeichnet.

Die Vorrichtung 7 zur Bestimmung der Geschwindigkeit v(t) muss derart angeordnet sein, dass die Fahrzeuggeschwindigkeit während der gesamten Überfahrt des Fahrzeuges 1 mit allen Achsen über dem WIM-Sensor 5 erfasst werden kann. Die Daten F(t) und v(t) werden zu einer Auswerteeinheit 10 gesandt, welche die beiden Datenreihen F(t), v(t) zeitlich synchronisiert. Wichtig ist dabei, dass die Synchronisation wirklich zeitgleiche Datenreihen zusammenstellt.

In der Fig. 4 ist eine Fahrzeugkomposition 1 mit fünf Achsen dargestellt. Vorzugsweise verfügt das Messsystem 12 resp. die Messanordnung 13 über eine Vorrichtung 11 zum Ermitteln des Endes einer Fahrzeugkomposition 1. Diese kann beispielsweise in Form eines Strahlengitters, das quer zur Fahrbahn errichtet werden kann, oder in Form von Induktionsschlaufen, welche im Strassenbelag eingebaut werden können, realisiert werden. In der Fig. 4 ist diese Einrichtung 11 schematisch eingezeichnet.

Sobald das Ende einer Fahrzeugkomposition 1 festgestellt wird, wird ein entsprechendes Signal an die Auswerteeinheit 10 gesandt. Diese schliesst dann die Gewichtsermittlung ab und bereitet sich auf die Gewichtsermittlung eines nächsten Fahrzeuges 1' vor.

In Fig. 5 sind die synchronisierten Radlasten F(t) und v(t) für eine Fahrzeugkomposition 1 mit fünf Achsen für eine Seite des Fahrzeuges dargestellt. In diesem Beispiel kommt das Fahrzeug 1 zwischenzeitlich zum Stillstand und rollt etwas rückwärts, bevor es seine Fahrt beschleunigt fortsetzt. Die ermittelten Radlasten fallen in der Darstellung entsprechend breiter aus bei langsamer Fahrt und schmäler bei schnellerer Fahrt, weil die Überfahrt über den WIM-Sensor dann eine kürzere Zeit in Anspruch nimmt.

Fig. 6 zeigt schematisch das Produkt von F(t) und v(t), was einer Gewichtung der Ladlasten mit der Geschwindigkeit entspricht.

Zur Ermittlung des Gewicht G der Fahrzeugkomposition 1 wird das Produkt der Radlasten F(t) und der Geschwindigkeiten v(t) über die gesamte Überfahrzeit als Ganzes oder für jedes Rad 2 einzeln integriert und mit einer Kalibrierkonstanten K, welche Kalibrierdaten des WIM-Sensors enthält, multipliziert. Das Gewicht G ergibt sich schliesslich aus der Summe dieser Resultate für alle Räder resp. aller WIM-Sensoren 5, 5', die nebeneinander angeordnet sind und gemeinsam die gesamte Fahrbahnbreite 4 abdecken.

In einer bevorzugten Ausführung ist das erfindungsgemässe Verfahren durch die folgenden Verfahrensschritte gekennzeichnet:
a) die Radlast Fᵢ(t) jedes Rades 2 i oder, bei Doppelbereifung, jedes Doppelrades i des Fahrzeuges 1 wird beim Abrollen auf der Strasse 4 durch WIM (Weigh in Motion) Sen-, soren einzeln als Zeitfunktion ermittelt;
a) die Geschwindigkeit v(t) des Fahrzeuges wird mindestens während der Überfahrt aller Räder 2 oder Doppelräder i eines WIM-Sensors 5 als Zeitfunktion ermittelt;
a) die ermittelten Radlasten Fᵢ(t) werden mit den ermittelten Geschwindigkeitswerten v(t) zeitlich synchronisiert und miteinander multipliziert Fᵢ·v;
a) die entstandenen Produkte Fᵢ·v werden über die Zeit dt während der gesamten Überfahrt des Fahrzeuges integriert;
a) die Integrale Iᵢ werden mit Kalibrierkonstanten Kᵢ multipliziert und zur Bestimmung des Gewichts G aufsummiert.
Erfindungsgemäss kann die Geschwindigkeit v(t) des Fahrzeuges 1 mittels Radar 7 erfasst werden. Dies ist eine einfache und ausgereifte Technik. Alternativ dazu kann sie auch mittels dem sogenannten Laser Doppler Velocimetry Verfahren bestimmt werden. Dieses Verfahren verwendet einen Laser 7, der schräg zur Fahrtrichtung gegen das Fahrzeug gerichtet ist und deren reflektierte Signale auf Grund des Dopplereffekts auf die Geschwindigkeit des Fahrzeuges schliessen lassen.

Alternativ dazu kann die Fahrzeuggeschwindigkeit mittels einer Vorrichtung erfasst werden, welche ein in Fahrtrichtung angeordneter Array von Strahlen 9 umfasst, der von den Rädern 2 des Fahrzeuges 1 bei der Überfahrt der WIM-Sensoren 5 sukzessiv durchfahren wird. Ein Beispiel eines solchen Arrays von Strahlen 9 ist in Fig. 7 dargestellt. Vorzugsweise beträgt der Abstand der einzelnen Strahlen 8 im Array 9 höchstens der Breite des WIM-Sensors 5, vorzugsweise etwa der Hälfte der Breite des WIM-Sensors 5. Dabei wird sichergestellt, dass bei jeder Überfahrt eines Rades über den WIM-Sensor mehrere Geschwindigkeitsdaten zur Verfügung stehen, unabhängig von der Durchfahrgeschwindigkeit. Im Gegensatz dazu ist bei einer Radarmessung das Zeitintervall zwischen zwei Messpunkten stets konstant. So werden bei einer schnellen Überfahrt von 200km/h weit weniger Geschwindigkeiten pro WIM-Sensor 5 Überfahrung erfasst als bei langsamen Geschwindigkeiten. Selbst bei Stillstand des Fahrzeuges 1 ist die Messrate bei Radarmessungen konstant. Durch die Bestimmung der Geschwindigkeit durch ein in Fahrtrichtung angeordneter Array von Strahlen 9 sind die Anzahl Geschwindigkeitsmessungen dagegen stets konstant. Dadurch ist die Genauigkeit der Gewichtung der einzelnen Radlasten auch gleich für alle Räder 2 und für alle Fahrzeuge 1, unabhängig von der jeweiligen Fahrgeschwindigkeit. Dabei sollte allerdings darauf geachtet werden, dass der Array 9 mindestens so lange ist, dass bei der Durchfahrt eines Fahrzeuges mit maximal anzunehmender Radgrösse stets mindestens ein Strahl 8 des Arrays 9 nicht von einem Rad 2 unterbrochen ist. So ist gewährleistet, dass die Geschwindigkeit stets mit ausreichender Genauigkeit ermittelt werden kann und kein Systemfehler, beispielsweise durch Stillstand des Fahrzeuges 1 auf dem WIM-Sensor 5, auftritt.

Vorzugsweise wird mittels einer Vorrichtung 11 ermittelt, welche Räder/Doppelräder 2 einer Fahrzeugkomposition 1 mit allen Anhängern zuzuordnen sind, zur Bestimmung des Gesamtgewichts der Fahrzeugkomposition 1.

Eine weitere Möglichkeit zum Verbessern der Genauigkeit der Gewichtsermittlung des Gewichts G eines Fahrzeuges 1 kann erreicht werden, indem anschliessend an den WIM-Sensor 5, in beispielsweise etwa 0.2 bis 1 m Abstand, ein weiterer WIM-Sensor 6 quer über die gesamte Fahrbahn 4 im Strassenabschnitt 3 verlegt wird. Dieser zweite WIM-Sensor 6 kann, wie der erste WIM-Sensor, aus mehreren aneinander angereihten WIM-Sensoren 6, 6' bestehen, die in ihrer Gesamtheit die ganze Fahrbahn 3 überqueren. In der Folge wird von einem WIM-Sensor 6 gesprochen, obwohl es mehrere sein können. In Fig. 7 ist eine Messanordnung 13 mit einem zweiten WIM-Sensor 6 dargestellt.

Dieser zweite WIM-Sensor 6 ist ebenfalls mit der Auswerteeinheit 10 verbunden zum Übermitteln der erfassten Daten. Die Geschwindigkeit v(t) muss nun natürlich so lange erfasst werden, bis das letzte Rad 2 der Fahrzeugkomposition 1 den zweiten WIM-Sensor 6 vollständig überquert hat.

Jede Radlast wird nun mit der dazugehörigen Geschwindigkeit bei jedem WIM-Sensor 5, 6 analysiert. Je nach Plausibilität der Ergebnisse wird dann eine WIM-Sensor Messung c für eine Radlast verworfen und nur das Ergebnis der anderen WIM-Messung Fᵢ²(t) berücksichtigt, oder, wenn beide Ergebnisse plausible Werte ergeben, werden beide Ergebnisse gemittelt berücksichtigt zur weiteren Ermittlung des Fahrzeuggewichts g. Fehlmessungen können insbesondere beim Rückwärtsfahren entstehen.

Erfindungsgemäss kann auf Grund der ermittelten Gewichtsdaten G eine Gebühr für die Überfahrt erhoben werden. Dies kann beispielsweise direkt über ein Abbuchungssystem auf eine in Fahrzeug 1 mitgeführte elektronisch kommunizierende Komponente geschehen, oder über die Abbuchung auf einem Konto, das über eine Identifikation des Fahrzeuges 1 dem Fahrzeugeigentümer zugeordnet werden kann.

Auf diese Weise können Mautstellen eingerichtet werden, welche bequem gewichtsspezifische Mautbeträge einfordern können, insbesondere ohne erzwungenes Anhalten oder Verlangsamen der Fahrzeuge 1, wobei die Genauigkeit der Gewichtsmessung G für alle Geschwindigkeiten gewährleistet ist.

### Referenzzeichen

- 1 1': Fahrzeug, Fahrzeugkomposition
- 2: Rad, Doppelrad
- 3: Strassenabschnitt
- 4: Strasse
- 5 5': Weigh-in-Motion Sensor; WIM-Sensor, WIM-Sensorreihe
- 6 6': Zweiter WIM-Sensor, zweite WIM-Sensorreihe
- 7: Vorrichtung zur Bestimmung der Geschwindigkeit, Radar, Laser Doppler Velocimety Gerät
- 8: Strahl
- 9: Array von Strahlen
- 10: Auswerteeinheit
- 11: Vorrichtung zur Bestimmung des Endes einer Fahrzeugkomposition
- 12: Messsystem
- 13: Messanordnung
- 14: Länge der Aufstandsfläche
- G: Gewicht
- F(t): zeitabhängige Radlast
- V(t): zeitabhängige Geschwindigkeit
- i: einzelnes Rad oder Doppelrad
- I: Integral von F(t)·v(t)
- K: Kalibrierkonstante

## Patentansprüche

1. Verfahren zur Bestimmung des Gewichts (G) eines Fahrzeuges (1) während der Fahrt auf einem Strassenabschnitt (3) einer Strasse (4) mittels mindestens eines Weigh-in-Motion (WIM) Sensors (5), wobei während der Überfahrt des Fahrzeuges (1) in diesem Strassenabschnitt (3) sowohl die Radlasten (Fᵢ(t)) aller einzelnen Räder (2) oder Doppelräder (i) als auch die Geschwindigkeit (vᵢ(t)) des Fahrzeuges (1) bei der gesamten Überfahrt als Zeitfunktionen erfasst werden und bei der Auswertung der Daten zur Bestimmung des Gewichts (G) die Geschwindigkeiten (vᵢ(t)) und deren zeitliche Änderungen als Gewichtung der zeitgleich ermittelten Radlasten (Fᵢ(t)) verwendet werden, wobei der Weigh-in-Motion (WIM) Sensor (5) in Fahrtrichtung schmäler ist als die Länge (14) der Aufstandsfläche eines Fahrzeugrades.

2. Verfahren nach Anspruch 1, **gekennzeichnet durch** die Schritte,
a) dass die Radlast (Fᵢ(t)) jedes Rades (2, i) oder, bei Doppelbereifung, jedes Doppelrades des Fahrzeuges (1) beim Abrollen auf der Strasse (4) durch Weigh-in-Motion Sensoren (WIM) einzeln als Zeitfunktion ermittelt wird,
b) dass die Geschwindigkeit (v(t)) des Fahrzeuges (1) mindestens während der Überfahrt aller Räder oder Doppelräder (2) eines Weigh-in-Motion Sensors (WIM) als Zeitfunktion ermittelt wird,
c) dass die ermittelten Radlasten (Fᵢ(t)) mit den ermittelten Geschwindigkeitswerten (v(t)) zeitlich synchronisiert und miteinander multipliziert werden (Fᵢ·v),
d) dass die entstandenen Produkte (Fᵢ·v) über die Zeit (dt) während der gesamten Überfahrt des Fahrzeuges (1) integriert werden,
e) und dass die Integrale (Iᵢ) mit Kalibrierkonstanten (Kᵢ) multipliziert und zur Bestimmung des Gewichts (G) aufsummiert werden.

3. Verfahren nach Anspruch 1 oder 2, **dadurch gekennzeichnet, dass** die Geschwindigkeit (v(t)) des Fahrzeuges (1) mittels Radar (7) oder mittels Laser Doppler Velocimetry Verfahren (7) erfasst wird.

4. Verfahren nach Anspruch 1 oder 2, **dadurch gekennzeichnet, dass** die Geschwindigkeit (v(t)) des Fahrzeuges (1) mittels einer Vorrichtung (9) erfasst wird, welche ein in Fahrtrichtung angeordneter Array von Strahlen umfasst, der von den Rädern (2) des Fahrzeuges (1) bei der Überfahrt der WIM-Sensoren (5) sukzessiv durchfahren wird.

5. Verfahren nach Anspruch 4, **dadurch gekennzeichnet, dass** der Abstand der Strahlen im Array (9) höchstens der Breite des WIM-Sensors (5) beträgt, vorzugsweise etwa der Hälfte der Breite des Weigh-in-Motion Sensors (WIM).

6. Verfahren nach Anspruch 4 oder 5, **dadurch gekennzeichnet, dass** der Array (9) mindestens so lange ist, dass bei der Durchfahrt eines Fahrzeuges (1) mit maximal anzunehmender Radgrösse stets mindestens ein Strahl des Arrays (9) nicht von einem Rad (2) unterbrochen ist.

7. Verfahren nach einem der vorhergehenden Ansprüche, **dadurch gekennzeichnet, dass** als Überfahrgeschwindigkeiten der Fahrzeuge beliebige Geschwindigkeiten bis Autobahngeschwindigkeiten zugelassen sind, insbesondere auch negative Geschwindigkeiten.

8. Verfahren nach einem der vorhergehenden Ansprüche, **dadurch gekennzeichnet, dass** mittels einer Vorrichtung (11) ermittelt wird, welche Räder/Doppelräder (2,i) einer Fahrzeugkomposition mit allen Anhängern zuzuordnen sind, zur Bestimmung des Gesamtgewichts der Fahrzeugkomposition (1) .

9. Verfahren nach einem der vorhergehenden Ansprüche, **dadurch gekennzeichnet, dass** die Fahrzeuggeschwindigkeiten (v(t)) und die Radlasten (F(t)) aller Räder/Doppelräder (2) an mindestens einem zweiten Weigh-in-Motion Sensor (6), der in Fahrtrichtung hinter dem ersten Weigh-in-Motion Sensor (5) angeordnet ist, ein zweites mal erfasst werden zum Verbessern der Genauigkeit der Gewichtsermittlung.

10. Verfahren nach Anspruch 9, **dadurch gekennzeichnet, dass** jede Radlast/Doppelradlast mit der dazugehörigen Geschwindigkeit bei jedem Weigh-in-Motion Sensor (WIM) analysiert wird und je nach Plausibilität der Ergebnisse eine Weigh-in-Motion Sensor (WIM) Messung verworfen wird und nur die andere berücksichtigt wird oder beide Ergebnisse gemittelt berücksichtigt werden zur weiteren Ermittlung des Fahrzeuggewichts (G).

11. Verfahren nach einem der vorhergehenden Ansprüche, **dadurch gekennzeichnet, dass** auf Grund der ermittelten Gewichtsdaten (G) über ein Abbuchungssystem auf eine im Fahrzeug (1) mitgeführte elektronisch kommunizierende Komponente oder über eine Abbuchung auf einem Konto, das über eine Identifikation des Fahrzeuges (1) einem Fahrzeugeigentümer zugeordnet werden kann, eine Gebühr für die Überfahrt erhoben wird.

12. Messsystem zur Bestimmung des Gewichts (G) eines Fahrzeuges (1) während der Fahrt auf einem Strassenabschnitt (3) unter Berücksichtigung der Geschwindigkeit des Fahrzeuges (1) und deren zeitliche Änderungen während der Gewichtsermittlung gemäss einem der vorherhegenden Ansprüche, umfassend mindestens einen Weigh-in-Motion Sensor (5) zum Einbauen in einen Strassenabschnitt (3) einer Fahrbahn (4), der Überfahr-Radlasten (F(t)) zeitabhängig erfassen kann und der in Fahrtrichtung schmäler ist als die Länge (14) der Aufstandsfläche eines Rades, eine Vorrichtung zum Bestimmen der Geschwindigkeit (v(t)) eines Fahrzeuges als Zeitfunktion während einer Fahrt in einen Strassenabschnitt (3), sowie eine Auswerteeinheit (10) zum Auswerten der ermittelten Daten.

13. Messsystem (12) nach Anspruch 11 umfassend zusätzlich eine Vorrichtung (11) zum Ermitteln des Endes einer Fahrzeugkomposition (1), welche einen Strassenabschnitt (3) überfährt, beispielsweise in Form eines Strahlengitters, das quer zur Fahrbahn errichtet werden kann, oder in Form von Induktionsschlaufen, welche im Strassenbelag eingebaut werden können.

14. Messsystem nach Anspruch 11 oder 13, **dadurch gekennzeichnet, dass** die Vorrichtung (7) zum Bestimmen der Geschwindigkeit eines Fahrzeuges ein Radar, ein mittels Laser Doppler Velocimetry Verfahren messendes Gerät oder ein Gerät zur Erzeugung und Erfassung eines Arrays von Strahlen (9) ist.

15. Messanordnung (13) zur Bestimmung des Gewichts (G) eines Fahrzeuges (1) während der Fahrt auf einem Strassenabschnitt (3) einer Strasse (4) gemäss einem der Ansprüche 1 bis 11 umfassend ein Messsystem (12) nach einem der Ansprüche 11 bis 14, **dadurch gekennzeichnet, dass** der Weigh-in-Motion Sensor (WIM) in einer Strasse (4) quer zur Fahrtrichtung plan mit seiner Oberfläche zur Strassenoberfläche eingebaut ist und dass der Weigh-in-Motion Sensor (WIM) in Fahrtrichtung schmäler ist als die Länge (14) der Aufstandsfläche eines Rades.

## Claims

1. A method for determining the weight (G) of a vehicle (1) while it is travelling on a section (3) of road (4) by means of at least one weigh-in-motion (WIM) sensor (5), wherein when the vehicle (1) travels along this section of road (3) both the wheel loads (Fᵢ(t)) of all the individual wheels (2) or twin wheels (i), and the speed (vᵢ(t)) of the vehicle (1) during the entire passing are acquired as time functions, and during evaluation of the data for determining the weight (G) the speeds (vᵢ(t)) and their change over time are used as weighting of the simultaneously determined wheel loads (Fᵢ(t)), whereas in the direction of travel the weigh-in-motion (WIM) sensor (5) is narrower than the length (14) of the footprint of a vehicle wheel.

2. The method according to claim 1, **characterised by** the steps according to which
a) the wheel load (Fᵢ(t)) of each wheel (2, i) or, in the case of twin wheels, of each twin wheel of the vehicle (1) is individually acquired as a time function, during rolling on the road (4), by weigh-in-motion sensors (WIM),
b) the speed (v(t)) of the vehicle (1), at least while all the wheels or twin wheels (2) pass over a weigh-in-motion sensor (WIM), is determined as a time function,
c) the determined wheel loads (Fᵢ(t)) are synchronised with the determined speed values (v(t)) and are multiplied by each other (Fᵢ.v),
d) the resulting products (Fᵢ.v) are integrated over the time (dt) during the entire passing over of the vehicle (1),
e) and the integrals (Iᵢ) are multiplied by calibration constants (Kᵢ) and are added up for determining the weight (G).

3. The method according to claim 1 or 2, **characterised in that** the speed (v(t)) of the vehicle (1) is acquired by means of radar (7) or by means of the laser Doppler velocimetry method (7) .

4. The method according to claim 1 or 2, **characterised in that** the speed (v(t)) of the vehicle (1) is acquired by means of a device (9) comprising an array of beams, which array is arranged in the direction of movement of the vehicle, through which array the wheels (2) of the vehicle (1) travel in turn as they travel over the WIM sensors (5).

5. The method according to claim 4, **characterised in that** the distance between the beams in the array (9) at most corresponds to the width of the WIM sensor (5), preferably to approximately half the width of the weigh-in-motion sensor (WIM).

6. The method according to claim 4 or 5, **characterised in that** the array (9) is at least sufficiently long so that when a vehicle (1) with the maximum wheel size to be assumed passes, always at least one beam of the array (9) is not interrupted by a wheel (2).

7. The method of any one of the preceding claims, **characterised in that** any speeds up to motorway speeds, in particular also negative speeds, are admissible as passing speeds of the vehicles.

8. The method of any one of the preceding claims, **characterised in that** by means of a device (11) it is determined which wheels/twin wheels (2, i) are to be allocated to a vehicle composition with all the trailers in order to determine the total weight of the vehicle composition (1).

9. The method of any one of the preceding claims, **characterised in that** the vehicle speeds (v(t)) and the wheel loads (F(t)) of all the wheels/twin wheels (2) are acquired a second time on at least a second weigh-in-motion sensor (6), which in the direction of travel is arranged downstream of the first weigh-in-motion sensor (5), in order to improve the accuracy of weight determination.

10. The method according to claim 9, **characterised in that** each wheel load/twin wheel load with the associated speed is analysed at each weigh-in-motion sensor (WIM) and, depending on the plausibility of the results, a weigh-in-motion sensor (WIM) reading is rejected and only the other is taken into account, or the average of both results is taken into account in further determining the vehicle weight (G).

11. The method according to any one of the preceding claims, **characterised in that** based on the determined weight data (G) by way of a debiting system to an electronically communicating component carried in the vehicle (1), or by way of debiting an account that can be associated with the vehicle owner by way of identification of the vehicle (1), a toll for transit is levied.

12. A measuring system for determining the weight (G) of a vehicle (1) while it is travelling on a section (3) of road, taking into account the speed of the vehicle (1) and its changes over time during determination of the weight according to any one of the preceding claims, comprising at least one weigh-in-motion sensor (5) for installation in a section of road (3) of a roadway (4), which can acquire passing wheel loads (F(t)) in a time-dependent manner, and in the direction of travel is narrower than the length (14) of the footprint of a wheel, a device for determining the speed (v(t)) of a vehicle as a time function while it is travelling on a section of road (3), as well as an evaluation unit (10) for evaluating the determined data.

13. The measuring system (12) according to claim 12, additionally comprising a device (11) for determining the end of a vehicle composition (1) that travels on a section of road (3), for example in the form of a beam grid that can be established across the roadway, or in the form of induction loops that can be installed in the road surface.

14. The measuring system according to claim 12 or 13, **characterised in that** the device (7) for determining the speed of a vehicle is a radar, a device measuring by means of laser Doppler velocimetry methods, or a device for generating and acquiring an array of beams (9).

15. A measuring arrangement (13) for determining the weight (G) of a vehicle (1) while it is travelling on a section (3) of road (4) according to any one of claims 1 to 11, comprising a measuring system (12) according to any one of claims 12 to 14, **characterised in that** the weigh-in-motion sensor (WIM) is installed in a road (4) across the direction of travel so that its surface is flush with the road surface, and **in that** the WIM sensor is narrower in the direction of travel than the length (14) of the footprint of a wheel.

## Revendications

1. Procédé pour déterminer le poids (G) d'un véhicule (1) pendant le trajet sur un segment de route (3) d'une route (4) au moyen d'au moins un capteur de pesage dynamique (WIM) (5), dans lequel on détecte, lors de la traversée du véhicule (1) dans ce segment de route (3), à la fois les charges des roues (Fᵢ(t)) de toutes les roues individuelles (2) ou des roues jumelées (i) et la vitesse (vᵢ(t)) du véhicule (1) pendant toute la traversée en tant que fonctions temporelles, et en ce qu'on utilise, dans l'évaluation des données pour déterminer le poids (G), les vitesses (vᵢ(t)) et leurs variations temporelles comme pondération des charges de roues (Fᵢ(t)) déterminées simultanément, dans lequel ledit capteur de pesage dynamique (WIM) (5) est plus étroit que la longueur (14) de la surface de contact d'une roue de véhicule dans le sens de déplacement.

2. Procédé selon la revendication 1, **caractérisé par** les étapes de
a) la détermination individuelle de la charge de roue (Fᵢ(t)) de chaque roue (2, i) ou, dans le cas de roues jumelées, de chaque des roues jumelées du véhicule (1) se déroulant sur la route (4) par des capteurs de pesage dynamique (WIM) en tant que fonction temporelle,
b) la détermination de la vitesse (v(t)) du véhicule (1) au moins lors de la traversée de toutes les roues ou roues jumelées (2) sur un capteur de pesage dynamique (WIM) en tant que fonction temporelle,
c) la synchronisation temporelle des charges des roues (Fᵢ(t)) déterminées avec les valeurs de vitesse (v(t)) déterminées et la multiplication entre elles (Fᵢ·v),
d) l'intégration des produits générés (Fi·v) au cours de temps (dt) pendant toute la traversée du véhicule (1),
et e) la multiplication des intégrales (Iᵢ) par des constantes d'étalonnage (Kᵢ), puis leur addition pour déterminer le poids (G).

3. Procédé selon la revendication 1 ou 2, **caractérisé en ce que** la vitesse (v(t)) du véhicule (1) est détectée par radar (7) ou par le procédé de la vélocimétrie laser Doppler.

4. Procédé selon la revendication 1 ou 2, **caractérisé en ce que** la vitesse (v(t)) du véhicule (1) est détectée au moyen d'un dispositif (9) comprenant un réseau des rayons orienté dans le sens de déplacement, rayons qui les roues (2) du véhicule (1) traversent successivement lors de la traversée des capteurs WIM (5).

5. Procédé selon la revendication 4, **caractérisé en ce que** la distance entre les rayons dans le réseau (9) est au plus égale à la largeur du capteur WIM (5), de préférence égale à la moitié environ de la largeur du capteur de pesage dynamique (WIM).

6. Procédé selon la revendication 4 ou 5, **caractérisé en ce que** le réseau (9) est au moins suffisamment long pour que, lors du passage d'un véhicule (1) dont les roues ont la taille de roue maximale prévue, au moins un rayon du réseau (9) n'est toujours pas interrompue d'une roue (2).

7. Procédé selon l'une quelconque des revendications précédentes, **caractérisé en ce qu'**en tant que vitesses de la traversée des véhicules sont admissibles des vitesses quelconques jusqu'à les vitesses autoroutières et particulièrement des vitesses négatives.

8. Procédé selon l'une quelconque des revendications précédentes, **caractérisé en ce qu'**on détermine au moyen d'un dispositif (11) quelles roues/roues jumelées (2, i) doivent être attribuées à un ensemble de véhicules incluant toutes les remorques pour déterminer le poids total de l'ensemble de véhicules (1).

9. Procédé selon l'une quelconque des revendications précédentes, **caractérisé en ce qu'**on détecte une seconde fois les vitesses des véhicules (v(t)) et les charges des roues (F(t)) de toutes les roues/roues jumelées (2) sur au moins un seconde capteur de pesage dynamique (6) agencé derrière le premier capteur de pesage dynamique (5) dans le sens de déplacement pour améliorer la précision de la détermination du poids.

10. Procédé selon la revendication 9, **caractérisé en ce qu'**on analyse chaque charge de roue/charge de roue jumelée avec la vitesse associée au niveau de chaque capteur de pesage dynamique (WIM) et, en fonction de la plausibilité des résultats, on rejette une des mesures de capteur de pesage dynamique (WIM) en prenant en compte seulement l'autre ou on prend en compte la valeur moyenne des deux résultats dans la suite de la détermination du poids de véhicule (G).

11. Procédé selon l'une quelconque des revendications précédentes, **caractérisé en ce qu'**une redevance est prélevée pour la traversée sur la base des données de poids (G) déterminées en utilisant un système à prélèvement sur un composant de communication électronique à bord du véhicule (1) ou par un prélèvement sur compte bancaire qui peut être associé à un propriétaire du véhicule par l'identification du véhicule (1) .

12. Système de mesure pour déterminer le poids (G) d'un véhicule (1) pendant le trajet sur un segment de route (3) prenant en compte la vitesse du véhicule (1) et les changements de vitesse au cours de temps lors de la détermination du poids selon l'une quelconque des revendications précédentes, comprenant au moins un capteur de pesage dynamique (5) à installer dans un segment de route (3) d'une route (4) et configuré pour détecter des charges des roues (F(t)) lors de la traversée en fonction du temps et qui est plus étroit dans le sens de déplacement que la longueur (14) de la surface de contact d'une roue de véhicule, un dispositif pour déterminer la vitesse (v(t)) d'un véhicule en tant que fonction temporelle lors d'un trajet dans un segment de route (3), ainsi qu'une unité d'évaluation (10) pour évaluer les données détectées.

13. Système de mesure (12) selon la revendication 11 comprenant en outre un dispositif (11) pour déterminer l'extrémité d'un ensemble de véhicules (1) traversant un segment de route (3), par exemple sous la forme d'une grille aux rayons qui peut être établie en travers de la route, ou en forme de boucles d'induction installables dans la surface de la route.

14. Système de mesure selon la revendication 11 ou 13, **caractérisé en ce que** le dispositif (7) pour déterminer la vitesse d'un véhicule est un radar, un dispositif mesurant selon un procédé de vélocimétrie laser Doppler ou un dispositif de génération et de détection d'un réseau de rayons (9).

15. Dispositif de mesure (13) pour déterminer le poids (G) d'un véhicule (1) pendant le trajet sur un segment de route (3) d'une route (4) selon l'une quelconque des revendications 1 à 11, comprenant un système de mesure (12) selon l'une quelconque des revendications 11 à 14, **caractérisé en ce que** le capteur de pesage dynamique (WIM) est installé dans une route (4) transversalement au sens de déplacement de manière que sa surface forme une surface plan avec la surface de la route, et **en ce que** le capteur de pesage dynamique (WIM) est plus étroit dans le sens de déplacement que la longueur (14) de la surface de contact d'une roue de véhicule.
